# EUROPÄISCHE PATENTSCHRIFT

(11) **EP 4 139 235 B1**
(45) Veröffentlichungstag und Bekanntmachung des Hinweises auf die Patenterteilung: **27.12.2023**
(21) Anmeldenummer: 21714820.4
(22) Anmeldetag: 15.03.2021
(51) Int. Cl.: B65G 54/02

(54) **TRANSPORTSYSTEM**
TRANSPORT SYSTEM
SYSTÈME DE TRANSPORT

(30) Priorität: 21.04.2020 DE 102020205002
(43) Veröffentlichungstag der Anmeldung: 01.03.2023
(73) Patentinhaber: Robert Bosch GmbH, 70442 Stuttgart (DE)
(72) Erfinder: REINISCH, Martin, 73733 Esslingen (DE)
(86) Internationale Anmeldenummer: PCT/EP2021/056472
(87) Internationale Veröffentlichungsnummer: WO 2021/213734

(56) Entgegenhaltungen:
- DE-A1-102014 214 696
- DE-A1-102014 214 697
- JP-A- H01 167 119

## Beschreibung

Die Erfindung betrifft ein magnetisches Transportsystem bestehend aus einer horizontalen Transporteinrichtung und aus einer vertikalen Transporteinrichtung gemäß dem Oberbegriff des Patentanspruchs 1.

In der Druckschrift DE 10 2016 224 951 A1 ist ein Planarantrieb bzw. eine Transporteinrichtung offenbart, deren Carrier entlang einer von einem Stator gebildeten Ebene mittels Magnetkraft bewegt werden. Dabei können die Carrier schwebend über der Ebene gehalten und bewegt werden. Es sind kontrollierte Bewegungen mit bis zu sechs Freiheitsgraden möglich. Der Carrier trägt eine in dieser Schrift als Payload bezeichnete Last. Die Transporteinrichtung kann im Tischbetrieb, also horizontal, und alternativ im Wandbetrieb, also vertikal, installiert und genutzt werden.

Die Druckschrift DE 10 2016 205 513 A1 offenbart ein Transportsystem, das als Kombination aus einer horizontalen Transporteinrichtung und einer vertikalen Transporteinrichtung ausgebildet ist. Beide Transporteinrichtungen funktionieren magnetisch und berührungslos. Dabei ist an der horizontalen Transporteinrichtung ein Carrier horizontal bewegbar angebracht, an dem eine als Gut bezeichnete Payload befestigt ist. Getrennt davon ist an der vertikalen Transporteinrichtung ein Carrier vertikal bewegbar angebracht, an dem eine getrennte Payload befestigt ist.
Die DE 10 2014 214 697 A1 und die DE 10 2014 214 696 A1 zeigen jeweils ein Transportsystem mit den Merkmalen des Oberbegriffs des Anspruchs 1. Die JP H01 167 119 A zeigt ein Transportsystem mit einem Transfer von einer vertikalen zu einer horizontalen Strecke, wobei die Strecken jeweils nur einen linearen Transport und keinen Transport in einer Ebene erlauben.

Nachteilig an derartigen Transportsystemen ist, dass eine Payload nicht bzw. nur mit einem speziellen separaten Handlingsystem von der horizontalen Transporteinrichtung an die vertikale Transortvorrichtung und umgekehrt übergeben werden könnte.

Dem entsprechend liegt der Erfindung die Aufgabe zu Grunde, ein Transportsystem zu schaffen, bei dem die Payload zwischen einer horizontalen Transporteinrichtung und einer vertikalen Transporteinrichtung durchgehend bewegbar ist.

Diese Aufgabe wird gelöst durch ein Transportsystem mit den Merkmalen des Patentanspruchs 1.

Weitere vorteilhafte Ausgestaltungen der Erfindung sind in den abhängigen Patentansprüchen beschrieben.

Das erfindungsgemäße Transportsystem weist eine horizontale Transporteinrichtung mit einem horizontalen Stator auf, mittels dem mindestens ein horizontaler Carrier in einer horizontalen Ebene - insbesondere entlang einer X-Achse und entlang einer Y-Achse - relativ zum horizontalen Stator bewegbar ist. Weiterhin weist das erfindungsgemäße Transportsystem eine vertikale Transporteinrichtung mit einem vertikalen Stator auf, mittels dem zumindest ein vertikaler Carrier in einer vertikalen Ebene - insbesondere entlang der Y-Achse und entlang einer Z-Achse - relativ zum vertikalen Stator bewegbar ist. Dabei ist mindestens ein Träger zur Aufnahme einer Payload vorgesehen. Erfindungsgemäß weist der Träger erste Eingriffsmittel und gesonderte zweite Eingriffsmittel auf, wobei der Träger über seine ersten Eingriffsmittel in formschlüssigen Eingriff mit dem horizontalem Carrier bringbar ist, und wobei der Träger über seine zweiten Eingriffsmittel in formschlüssigen Eingriff mit dem vertikalen Carrier bringbar ist. Die beiden formschlüssigen Eingriffe sind so gestaltet, dass der Träger gegen die Schwerkraft am jeweiligen Carrier abgestützt und gegen eine horizontale Verschiebung und Verdrehung gesichert ist.

Es handelt sich erfindungsgemäß um eine rein passive, vorrichtungstechnisch einfache und damit kostengünstige Lösung, bei der eine Übergabe des Trägers zwischen den beiden Transporteinrichtungen rein durch die oben genannten Bewegungsfunktionen der beiden betroffenen Carrier erfolgt. Somit wird keine weitere Betätigung (des Trägers oder der beiden Carrier) und insbesondere kein spezielles separates Handlingsystem benötigt.

Bei einer besonders bevorzugten Anwendung des Transportsystems ist die Payload ein Werkstück, so dass der Träger ein Werkstückträger ist.

Abweichend von der oben genannten erfindungsgemäßen Ausgestaltung kann der Träger auch von der Payload ersetzt werden, so dass die Payload selbst die ersten und die zweiten Eingriffsmittel aufweist. Damit kann der Träger gespart werden.

Vorzugsweise ist der horizontale Carrier mittels dem horizontalen Stator auch in einem beschränkten Maß senkrecht zu dem horizontalen Stator - insbesondere entlang der Z-Achse - relativ zum horizontalen Stator bewegbar. Damit kann der horizontale Carrier in eine Schwebe über der horizontalen Ebene des horizontalen Stators gebracht werden und berührungslos parallel zu der horizontalen Ebene verfahren werden. Entsprechendes gilt auch für die vertikale Transporteinrichtung. Vorzugsweise ist also auch der vertikale Carrier mittels dem vertikalen Stator in einem beschränkten Maß senkrecht zu dem vertikalen Stator - insbesondere entlang der X-Achse - relativ zum horizontalen Stator bewegbar. Damit kann der vertikale Carrier in einen Abstand zu der vertikalen Ebene des vertikalen Stators gebracht werden und berührungslos parallel zu der vertikalen Ebene verfahren werden.

Die ersten Eingriffsmittel können magnetisch sein. So wird der Träger gegen die horizontale Verschiebung und Verdrehung relativ zu horizontalen Carrier gesichert.

Besonders bevorzugt wird es, wenn die ersten Eingriffsmittel mindestens zwei an einer Unterseite des Trägers angeordnete nach unten gerichteten senkrechte Fortsätze (z.B. Zapfen oder Pins) sind, und wenn der horizontale Carrier an seiner Oberseite eine entsprechend Anzahl von nach oben offenen Ausnehmungen (z.B. Bohrungen) hat. Umgekehrt können natürlich auch die ersten Eingriffsmittel mindestens zwei an einer Unterseite des Trägers angeordnete nach unten offene Ausnehmungen sein, wenn der horizontale Carrier an seiner Oberseite eine entsprechende Anzahl von nach oben gerichteten senkrechte Fortsätzen hat. Bei beiden Varianten wird der Träger durch Formschluss gegen die horizontale Verschiebung und Verdrehung relativ zum horizontalen Carrier gesichert.

Um dabei ein Raster von 1/2 Umdrehungen um eine Hochachse des Trägers mit entsprechend zwei definierten Auflagepositionen des Trägers auf dem horizontalen Carrier zu ermöglichen, wird es bevorzugt, wenn die zumindest zwei Paare von Fortsätzen und Ausnehmungen an einander diagonal gegenüber liegenden Eckbereichen des Trägers und des horizontalen Carriers vorgesehen sind.

Um dabei ein Raster von 1/4 Umdrehungen um die Hochachse des Trägers mit entsprechend vier definierten Auflagepositionen des Trägers auf dem horizontalen Carrier zu ermöglichen, wird es bevorzugt, wenn zwei weitere Paare von Fortsätzen und Ausnehmungen vorgesehen sind, so dass in allen vier Eckbereichen des Trägers und des horizontalen Carriers jeweils ein Paar von Fortsätzen und Ausnehmungen vorgesehen sind. Es können auch mehr als vier Paare von Fortsätzen und Ausnehmungen vorgesehen sein.

Wenn die Ausnehmungen und die Fortsätze konisch oder kegelig oder kegelstumpfförmig sind oder die Form eines Kugelabschnitts haben, sind bei einer Übergabe des Trägers von dem vertikalen Carrier auf den horizontalen Carrier eine gewisse Lagetoleranz in der horizontalen Ebene - insbesondere entlang der X- und Y-Achse - und eine Selbstzentrierung des Trägers auf dem horizontalen Carrier möglich. Damit ist der Träger nach der Übergabe von dem vertikalen Carrier auf den horizontalen Carrier präzise positioniert und eine präzise Positionserfassung des horizontalen Carriers mittels eines Sensorsystems bedeutet eine präzise Positionserfassung der Payload, insbesondere des Werkstücks z.B. für dessen Weiterbearbeitung.

Vorzugsweise hat der vertikale Carrier zwei Stege oder eine Gabel mit zwei Zinken. Dann hat der Träger zwei einander gegenüberliegende Seitenränder, an denen die zweiten Eingriffsmittel zumindest teilweise angeordnet oder gebildet sind. Die zweiten Eingriffsmittel sind zumindest teilweise an den beiden Stegen oder Zinken des vertikalen Carriers abstützbar.

Ein Abstand der beiden Seitenränder des Trägers entspricht - insbesondere entlang der Y-Achse - etwa (z.B. mit maximal 10% Abweichung) dem Abstand der beiden Stege oder Zinken.

Die beiden Ebene der Statoren schneiden sich in einer - sich insbesondere entlang der Y-Achse erstreckenden - Stoßkante, deren Länge mindestens dem Abstand der Stege bzw. Zinken und/oder mindestens dem Abstand der beiden Seitenränder des Trägers entspricht. Damit ist eine Übergabestelle des Trägers zwischen den beiden betroffenen Carriern definiert. Die Stoßkante kann auch länger sein. Damit sind entlang der Stoßkante verschieden Übergabestellen realisierbar.

Um dabei ein Raster von 1/2 Umdrehungen um die Hochachse des Trägers mit entsprechend zwei definierten Auflagepositionen des Trägers auf dem vertikalen Carrier zu ermöglichen, wird es bevorzugt, wenn die beiden Stege bzw. Zinken etwa parallel zueinander und etwa waagerecht sind, und wobei die beiden Seitenränder etwa parallel zueinander und etwa waagerecht sind. Damit sind die beiden Stege bzw. Zinken und die beiden Seitenränder etwa parallel zur horizontalen Ebene. Die beiden Stege bzw. Zinken erstrecken sich weg vom vertikalen Carrier insbesondere entlang der X-Achse.

Um dabei ein Raster von 1/4 Umdrehungen um die Hochachse des Trägers mit entsprechend vier definierten Auflagepositionen des Trägers auf dem vertikalen Carrier zu ermöglichen, wird es bevorzugt, wenn der Träger zwei weitere einander gegenüberliegende etwa parallele und etwa waagerechte Seitenränder hat, an denen weitere Eingriffsmittel aus der Gruppe der zweiten Eingriffsmittel angeordnet oder gebildet sind. Diese können sich alternativ zu den erstgenannten Eingriffsmitteln aus der Gruppe der zweiten Eingriffsmittel an den Stegen oder Zinken des vertikalen Carriers abstützen, wenn der Träger in einer um 90 Grad um die Hochachse gedrehten Position von dem vertikalen Carrier gegen die Schwerkraft abgestützt werden soll.

Auch der Abstand der beiden weiteren Seitenränder des Trägers entspricht dann - insbesondere entlang der Y-Achse - etwa (z.B. mit maximal 10% Abweichung) dem Abstand der beiden Stege bzw. Zinken. Damit ist es im Betrieb der vertikalen Transporteinrichtung möglich von allen Seiten auf den Träger oder auf die Payload zugreifen zu können, also auch von unten zwischen den beiden Stegen bzw. Zinken hindurch.

Gemäß einem ersten Ausführungsbeispiel der zweiten Eingriffsmittel hat der Träger an den zwei oder vier Seitenrändern jeweils zwei dachförmige oder bogenförmige Aufnahmeabschnitte. Dabei hat jeder Steg bzw. jede Zinke entsprechend zwei u-förmige oder v-förmige Aufnahmeabschnitte oder Einkerbungen, in denen die dachförmigen oder bogenförmigen Aufnahmeabschnitte aufgenommen werden können. So wird der Träger durch Formschluss gegen die horizontale Verschiebung und Verdrehung relativ zu vertikalen Carrier gesichert.

Die vier oder acht dachförmigen oder bogenförmigen Aufnahmeabschnitte können an seitlich aus einem Hauptkörper des Trägers hinausragenden Haken gebildet sein. Dabei ist der Abstand der zwei oder vier Seitenränder des Trägers paarweise etwas kleiner als der Abstand der Stege oder Zinken.

Es können auch mehr als acht Haken am Träger vorgesehen sein.

Gemäß einem zweiten Ausführungsbeispiel der zweiten Eingriffsmittel sind diese von waagerechten Nuten oder Stufen gebildet, die jeweils unter den zwei oder den vier Seitenrändern des Trägers angeordnet sind. Dann ist in den Nuten jeweils ein Steg bzw. eine Zinke zumindest abschnittsweise aufnehmbar, oder an den Stufen ist jeweils ein Steg bzw. eine Zinke zumindest abschnittsweise anlegbar. Dabei ist der Abstand der zwei oder vier Seitenränder des Trägers paarweise etwas größer als der Abstand der Stege oder Zinken.

Um bei dem erfindungsgemäßen Transortsystem insbesondere bei der Verwendung von mehreren Carriern möglichst viele Gleichteile zu haben, wird es bevorzugt, wenn ein Hauptkörper des mindestens einen horizontalen Carriers und ein Hauptkörper des mindestens einen vertikalen Carriers baugleich sind. Insbesondere kann der Hauptkörper dem horizontalen Carrier entsprechen, und der vertikale Carrier wird dann lediglich durch Befestigung der beiden Stege bzw. der Gabel an einem derartigen Hauptkörper gefertigt.

Um das Raster von 1/4 Umdrehungen um die Hochachse des Trägers mit entsprechend vier definierten Auflagepositionen des Trägers einerseits auf dem horizontalen Carrier und andererseits auf dem vertikalen Carrier zu erleichtern, wird es bevorzugt, wenn der Hauptkörper des horizontalen Carriers und der Hauptkörper des vertikalen Carriers und der Hauptkörper des Trägers jeweils eine quadratische Grundfläche haben.

Vorzugsweise ist der horizontale Stator modular aus horizontalen Statorkacheln gebildet, und der vertikale Stator ist modular aus vertikalen Statorkacheln gebildet. Die Statorkacheln erzeugen ein magnetisches Wanderfeld, das über Ränder der Statorkacheln hinweg wirken kann, wobei die Carrier jeweils mindestens einen Permanentmagneten aufweisen, mittels dem der Carrier bewegbar ist. Um bei dem erfindungsgemäßen Transortsystem möglichst viele Gleichteile zu haben, wird es bevorzugt, wenn die horizontalen Statorkacheln und die vertikalen Startorkacheln gleich sind.

Um sicher und reproduzierbar die mindestens eine Übergabestelle einerseits mit dem horizontalen Carrier und andererseits mit dem vertikalen Carrier anfahren zu können, wird es besonders bevorzugt, wenn an dem horizontalen und dem vertikalen Stator ein jeweiliges Sensorsystem angeordnet ist, über das die Position des jeweiligen Carriers relativ zum jeweiligen Stator bestimmbar ist. Ein derartiges Sensorsystem wird oft auch zur Positionierung des Carriers und damit des Trägers mit seiner Payload an einer Bearbeitungsstation der jeweiligen Transporteinrichtung benötigt.

Mehrere Ausführungsbeispiele des erfindungsgemäßen Transportsystems sind in den Figuren dargestellt.

Es zeigen
Figur 1 einen beispielhaften möglichen Aufbau des erfindungsgemäßen Transportsystems in einer Draufsicht;
Figur 2 einen weiteren beispielhaften möglichen Aufbau des erfindungsgemäßen Transportsystems in einer Draufsicht;
Figur 3 einen weiteren beispielhaften möglichen Aufbau des erfindungsgemäßen Transportsystems in einer seitlichen Ansicht;
Figur 4 eine geschnittene Darstellung einer Seitenansicht eines Trägers mit Payload und eines horizontalen Carriers, die in einem der drei vorhergehenden Beispiele von Transportsystemen genutzt werden können;
Figur 5 eine Draufsicht auf den Träger mit Payload aus Figur 4 und auf einen vertikalen Carrier,
Figur 6 einen ersten Schritt einer Übergabe des Trägers von dem horizontalen Carrier an den vertikalen Carrier in einer Seitenansicht, wobei die Figur auch einen dritten Schritt einer Übergabe von dem vertikalen Carrier an den horizontalen Carrier zeigt,
Figur 7 einen mittleren Schritt der Übergabe des Trägers zwischen den beiden Carriern in einer Seitenansicht,
Figur 8 einen dritten Schritt der Übergabe des Trägers von dem horizontalen Carrier an den vertikalen Carrier, wobei die Figur auch einen ersten Schritt der Übergabe von dem vertikalen Carrier an den horizontalen Carrier zeigt; und
Figur 9 den Träger und einen horizontalen Carrier in einer Seitenansicht mit einem zweiten Ausführungsbeispiel der zweiten Eingriffsmittel.

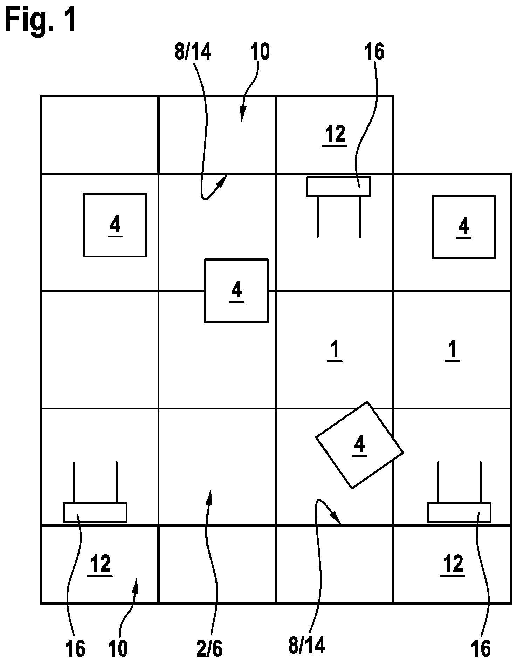

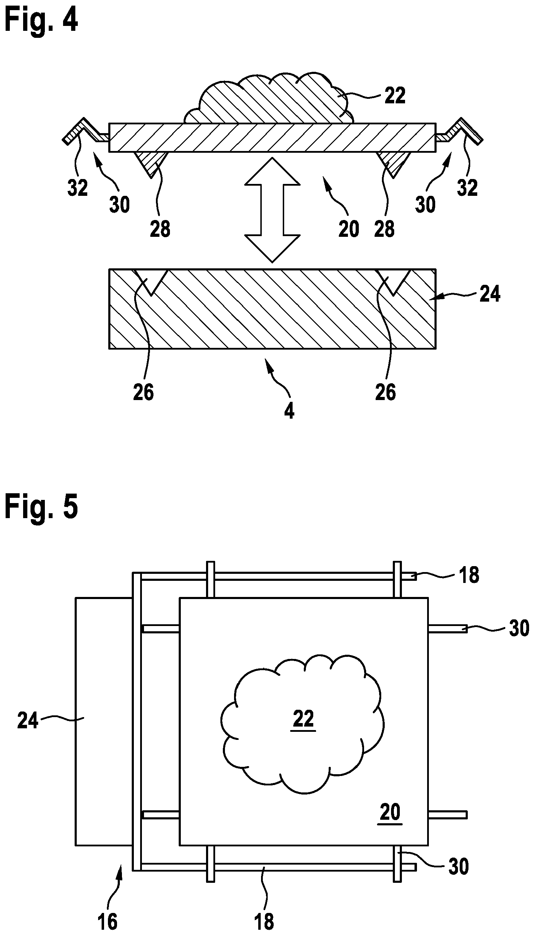

Figur 1 zeigt beispielhaft einen ersten möglichen Aufbau des erfindungsgemäßen Transportsystems in einer Draufsicht. Es sind zwölf horizontale Statorkacheln 1 in Form eines Rechtecks angeordnet. Damit ist ein flächiger horizontaler Stator mit einer horizontalen Ebene 2 gebildet. Auf dieser horizontalen Ebene 2 oder in einem Schwebezustand um ein bestimmtes geringes Maß oberhalb dieser Ebene 2 sind beim gezeigten Ausführungsbeispiel vier horizontale Carrier 4 verfahrbar bzw. bewegbar. Damit ist eine horizontale Transporteinrichtung 6 geschaffen. Von jedem Carrier 4 ist ein Werkstückträger tragbar, der wiederum eine als Payload bezeichnet Last trägt; beide sind erst in Figur 4 gezeigt.

Weiterhin gemäß Figur 1 sind an zwei gegenüberliegenden Stoßkanten 8 der horizontalen Ebene 2 jeweilige vertikale Transporteinrichtungen 10 angeordnet, deren jeweilige vertikale Statorkacheln 12 in einer schematischen Seitenansicht gezeigt sind. Diese vertikalen Statorkacheln 12 bilden in prinzipiell vergleichbare Weise einen jeweiligen vertikalen Stator mit einer jeweiligen vertikalen Ebene 14. Auch auf den vertikalen Ebenen 14 oder in einem Schwebezustand um ein bestimmtes geringes Maß beabstandet zu diesen Ebenen14 sind Carrier 16 verfahrbar, die somit als vertikale Carrier 16 bezeichnet werden.

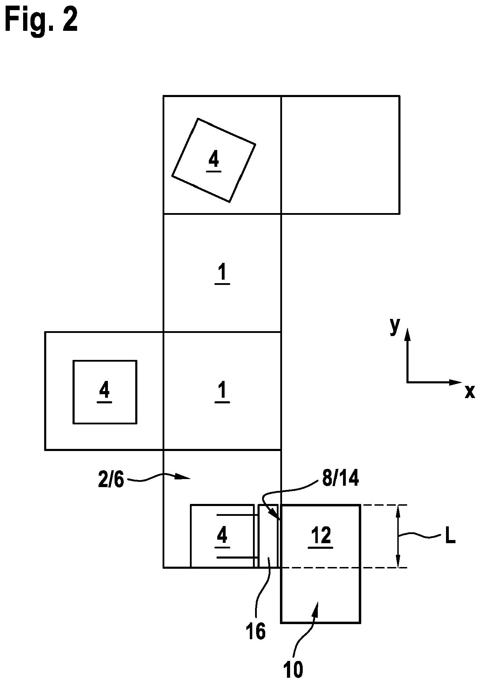

Figur 2 zeigt beispielhaft einen weiteren möglichen Aufbau eines erfindungsgemäßen Transportsystems, das abgesehen von der horizontalen Transporteinrichtung 6 nur eine vertikale Transporteinrichtung 10 aufweist. Deren Breite beträgt lediglich derjenigen einer vertikalen Statorkachel 12 und ist somit minimal. Außerdem entspricht eine Länge L der Stoßkante 8 nur der Breite eines vertikalen Carriers 16 und ist damit ebenfalls minimal. Gemäß Figur 2 ist aus den horizontalen Statorkacheln 1 ein horizontaler Stator mit verzweigten Bahnen gebildet.

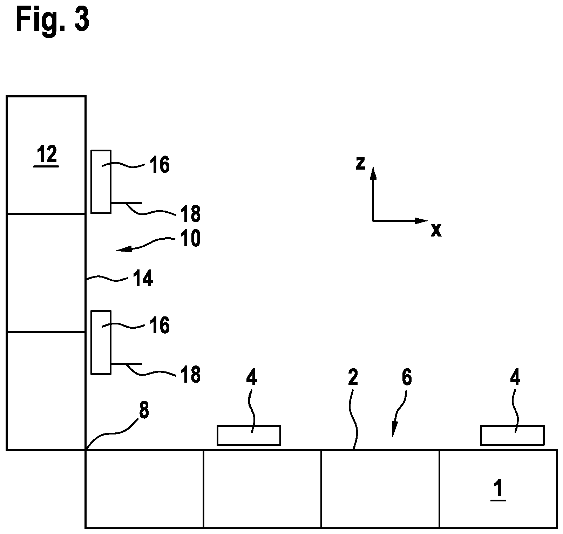

Figur 3 zeigt beispielhaft einen weiteren möglichen Aufbau eines erfindungsgemäßen Transportsystems in einer seitlichen Ansicht. Dabei ist abgesehen von der horizontalen Transporteinrichtung 6 wiederum nur eine vertikale Transporteinrichtung 10 vorgesehen. An beiden Transporteinrichtungen 6, 10 sind beispielhaft jeweils zwei Carrier 4, 16 gezeigt. Die horizontale Ebene 2 und die vertikale Ebene 14 schneiden sich in der Stoßkante 8.

An jedem vertikalen Carrier 16 ist eine Gabel mit zwei Zinken 18 befestigt, die sich parallel zueinander und auf gleicher Höhe parallel zu der horizontalen Ebene 2 erstrecken. In Figur 3 ist von jeder Gabel nur eine schematisch dargestellte Zinke 18 zu erkennen.

Figur 4 zeigt einen Schnitt eines Trägers 20 mit einer symbolischen Payload 22 und eines horizontalen Carriers 4, die in einem der drei vorhergehenden Beispiele von Transportsystemen genutzt werden können. Der Träger 20 und ein Hauptkörper 24 des horizontalen Carriers 4 sind (in dem in Figur 4 gezeigten seitlichen Schnitt nicht erkennbar) quadratisch. Der Hauptkörper 24 des horizontalen Carriers 4 hat in allen vier Eckbereichen an seiner Oberseite kegelförmige Ausnehmungen 26 mit nach unten gerichteten Spitzen. In Figur 4 ist die Schnittebene durch den Hauptkörper 24 des horizontalen Carriers 4 so gelegt, dass zwei der insgesamt vier Ausnehmungen 26 erkennbar sind.
Der Träger 20 hat an seiner Unterseite in allen vier Eckbereichen entsprechend dimensionierte kegelförmige Fortsätze 28 mit nach unten gerichteten Spitzen, von denen in Figur 4 nur zwei Fortsätze 28 erkennbar sind. Die vier Fortsätze 28 bilden die ersten Eingriffsmittel gemäß dem ersten Ausführungsbeispiel.

Wenn der Träger 20 einschließlich der Payload 22 gemäß dem Doppelpfeil von dem vertikalen Carrier 16 (vgl. Figur 3) auf den horizontalen Carrier 4 abgesenkt und auf diesem abgelegt wird, übernehmen die vier Paare von Ausnehmungen 26 und Fortsätzen 28 eine präzise (Nach)-Positionierfunktion.

Durch eine quadratische Anordnung der vier Paare von Ausnehmungen 26 und Fortsätzen 28 ist es möglich, den Träger 20 in vier Drehpositionen um eine (nicht gezeigte) Hochachse auf dem horizontalen Carrier 4 gemäß dem Doppelpfeil abzusetzen und in allen vier Drehpositionen den erfindungsgemäßen formschlüssigen Eingriff herzustellen, mit dem eine Sicherung gegen horizontale Verschiebung und Verdrehung des Trägers 20 gegenüber dem horizontalen Carrier 4 gegeben ist.

Weiterhin sind an den vier Seitenrändern des Hauptkörpers des Trägers 20 jeweils zwei Haken 30 befestigt, die sich nach außen weg vom Hauptkörper erstrecken. In Figur 4 sind nur zwei Haken 30 erkennbar. An jedem Haken 30 ist ein dachförmiger Aufnahmeabschnitt 32 gebildet. Die acht dachförmigen Aufnahmeabschnitte 32 bilden die zweiten Eingriffsmittel gemäß dem Ausführungsbeispiel. Jeweils vier dachförmige Aufnahmeabschnitte 32 werden auf die Zinken 18 gehängt, wenn sich der Träger 20 an dem vertikalen Carrier 16 (vgl. Figur 3) abstützen soll.

Figur 5 zeigt eine Draufsicht auf den Träger 20 mit der Payload 22 aus Figur 4 und auf den vertikalen Carrier 16 aus Figur 3. Es ist zu erkennen, dass an den vier Rändern des quadratischen Hauptkörpers des Trägers 20 jeweils zwei Haken 30 befestigt sind, so dass sich der Träger 20, wenn er in Eingriff mit dem vertikalen Carrier 16 ist, mit vier Haken 30 an den beiden parallelen Zinken 18 abstützt.

Durch diese Ausgestaltung ist es möglich, den Träger 20 in vier Drehpositionen um die (nicht gezeigte) Hochachse auf dem vertikalen Carrier 16 abzusetzen.

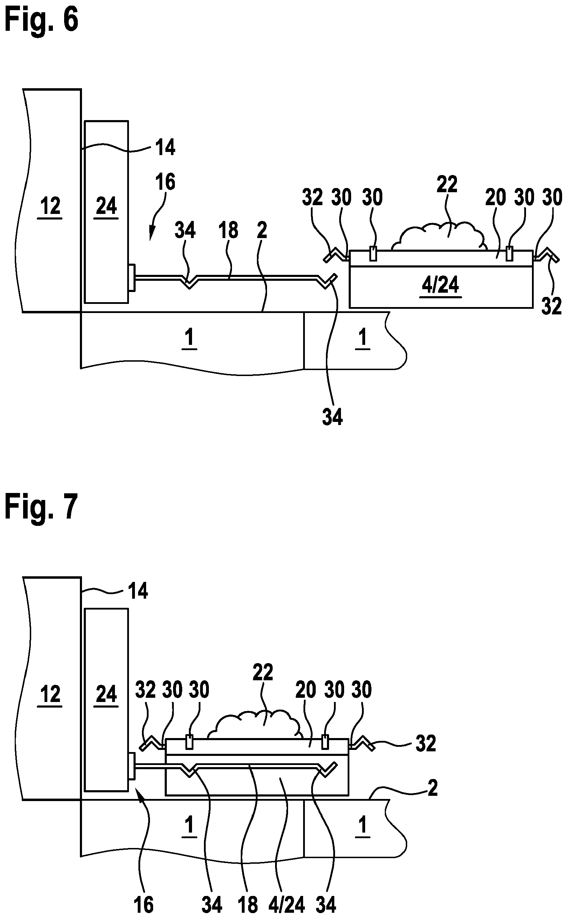

Figuren 6 bis 8 zeigen v-förmige Aufnahmeabschnitte 34 der Zinken 18. Genauer gesagt sind in jeder Zinke 18 mit einem Abstand, der demjenigen der beiden Haken 30 eines Seitenrandes des Trägers 20 entspricht, zwei v-förmige Aufnahmeabschnitte 34 gebildet. Damit ist es möglich in vier Drehpositionen des Trägers 20 um die Hochachse den erfindungsgemäßen formschlüssigen Eingriff zwischen den zweiten Eingriffsmitteln (dachförmige Aufnahmeabschnitte 32) und den v-förmigen Aufnahmeabschnitten 34 der Zinken 18 herzustellen, mit dem eine Sicherung gegen horizontale Verschiebung und Verdrehung des Trägers 20 gegenüber dem vertikalen Carrier 16 gegeben ist.

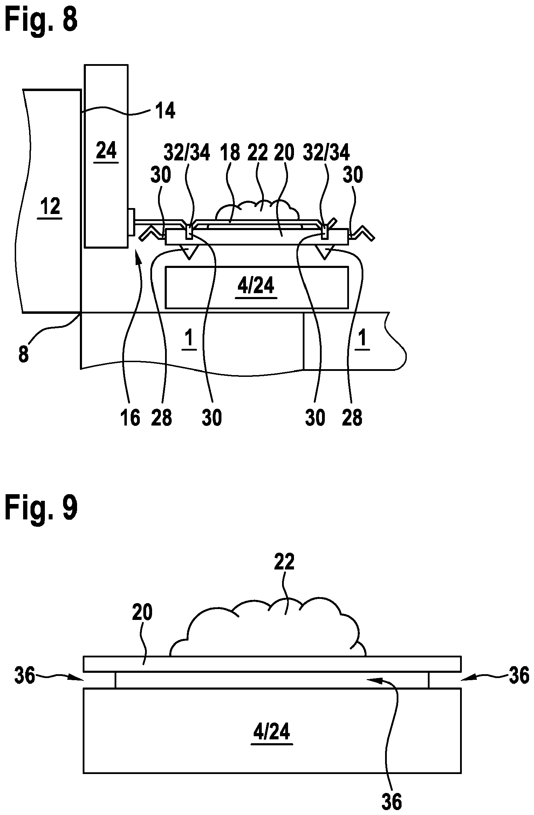

Figuren 6 bis 8 zeigen drei Schritte einer Übergabe des Trägers 20 von dem horizontalen Carrier 4 an den vertikalen Carrier 16 jeweils in einer Seitenansicht, wobei Figur 6 den ersten Schritt, Figur 7 den zweiten Schritt und Figur 8 den dritten Schritt zeigt.

Gemäß Figur 6 wird der vertikale Carrier 4 (nach links) in die Übergabeposition in Richtung zur Stoßkante 8 mittels der horizontalen Statorkacheln 1 bewegt. Dabei schwebt der horizontale Carrier 4 über der horizontalen Ebene 2. Insbesondere schweben die Haken 30 über den Zinken 18.

Gemäß Figur 7 ist der horizontale Carrier 4 mit dem Träger 20 in der Übergabeposition angekommen. Danach wird der vertikale Carrier 16 nach oben gefahren.

Gemäß Figur 8 hat der vertikale Carrier 16 den Träger 20 mittels seiner Zinken 18 vom horizontalen Carrier 4 abgehoben und dabei den Formschluss der ersten Eingriffsmittel (Fortsätze 28) mit den Ausnehmungen 26 gelöst, während er den Formschluss der zweiten Eingriffsmittel (dachförmige Ausnahmeabschnitte 32) mit den v-förmigen Ausnahmeabschnitten 34 der Zinken 18 hergestellt hat.

Figuren 6 bis 8 zeigen auch drei Schritte einer Übergabe des Trägers 20 von dem vertikalen Carrier 16 an den horizontalen Carrier 4, wobei Figur 8 den ersten Schritt, Figur 7 den zweiten Schritt und Figur 6 den dritten Schritt zeigt.

Figur 9 zeigt den Träger 20 und einen horizontalen Carrier 4 mit einem zweiten Ausführungsbeispiel der zweiten Eingriffsmittel in einer Seitenansicht. Diese sind von Stufen 36 gebildet. Genauer gesagt hat der Träger 20 an allen vier Seitenrändern unter seinem Hautköper eine jeweilige Stufe 36, die sich entlang dem jeweiligen Seitenrand erstreckt, und von denen in Figur 9 nur drei Stufen zu erkennen sind. In bzw. unter zwei einander gegenüberliegende Stufen 36 fährt jeweils eine Zinke 18.

Offenbart ist ein Transportsystem bestehend aus zwei planaren Transporteinrichtungen 6, 10, die senkrecht zueinander angeordnet sind. Jede Transporteinrichtung 6, 10 hat einen Stator, entlang dessen Ebene 2, 14 mindestens ein Carrier 4, 16 verfahren werden kann. Dabei ist mindestens ein Träger 20 zur Aufnahme einer Payload 22 vorgesehen. Der Träger 20 kann über seine ersten Eingriffsmittel in formschlüssigen Eingriff mit dem horizontalen Carrier 4 und über seine gesonderten zweiten Eingriffsmittel in formschlüssigen Eingriff mit dem vertikalen Carrier 16 gebracht werden. Die beiden formschlüssigen Eingriffe sind so gestaltet, dass der Träger 20 gegen die Schwerkraft am jeweiligen Carrier 4, 16 abgestützt und gegen eine horizontale Verschiebung und Verdrehung gesichert ist. Eine Übergabe des Trägers 20 zwischen den beiden Transporteinrichtungen erfolgt nur durch die genannten Bewegungsfunktionen der beiden betroffenen Carrier 4, 16.

### Bezugszeichenliste:

- 1: horizontale Statorkachel
- 2: horizontale Ebene
- 4: horizontaler Carrier
- 6: horizontale Transporteinrichtung
- 8: Stoßkante
- 10: vertikale Transporteinrichtung
- 12: vertikale Statorkachel
- 14: vertikale Ebene
- 16: vertikaler Carrier
- 18: Zinke
- 20: Träger
- 22: Payload
- 24: Hauptkörper
- 26: Ausnehmung
- 28: Fortsatz
- 30: Haken
- 32: dachförmiger Aufnahmeabschnitt
- 34: v-förmiger Aufnahmeabschnitt
- 36: Stufe

- L: Länge der Stoßkante

## Patentansprüche

1. Transportsystem mit einer horizontalen Transporteinrichtung, die einen horizontalen Stator aufweist, mittels dem mindestens ein horizontaler Carrier (4) in einer horizontalen Ebene (2) bewegbar ist, und mit einer vertikalen Transporteinrichtung, die einen vertikalen Stator aufweist, mittels dem zumindest ein vertikaler Carrier (16) in einer vertikalen Ebene (14) bewegbar ist, wobei mindestens ein Träger (20) zur Aufnahme einer Payload (22) vorgesehen ist, **dadurch gekennzeichnet, dass** der Träger (20) erste Eingriffsmittel (28) "und gesonderte zweite Eingriffsmitte (32) aufweist, wobei der Träger (20) über seine ersten Eingriffsmittel in formschlüssigen Eingriff mit dem horizontalem Carrier (4) bringbar ist, und wobei der Träger (20) über seine zweiten Eingriffsmittel in formschlüssigen Eingriff mit dem vertikalen Carrier (16) bringbar ist, wobei die beiden formschlüssigen Eingriffe so gestaltet ist, dass der Träger (20) gegen die Schwerkraft am jeweiligen Carrier (4, 16) abgestützt ist, und gegen eine horizontale Verschiebung gesichert ist.

2. Transportsystem nach Anspruch 1, wobei die ersten Eingriffsmittel mindestens zwei an einer Unterseite des Trägers (20) angeordnete nach unten offene Ausnehmungen (26) sind, und wobei der horizontale Carrier (4) an seiner Oberseite eine entsprechend Anzahl von nach oben gerichteten Fortsätzen (28) hat, oder wobei die ersten Eingriffsmittel mindestens zwei an einer Unterseite des Trägers (20) angeordnete nach unten gerichtete Fortsätze (28) sind, und wobei der horizontale Carrier (4) an seiner Oberseite eine entsprechend Anzahl von nach oben offenen Ausnehmungen (26) hat.

3. Transportsystem nach Anspruch 2, wobei die zumindest zwei Paare von Fortsätzen (28) und Ausnehmungen (26) an einander diagonal gegenüberliegenden Eckbereichen des Trägers (20) und des horizontalen Carriers (4) vorgesehen sind.

4. Transportsystem nach Anspruch 3, wobei zwei weitere Paare von Fortsätzen (28) und Ausnehmungen (26) vorgesehen sind, so dass in allen vier Eckbereichen des Trägers (20) und des horizontalen Carriers (4) jeweils ein Paar von Fortsätzen (28) und Ausnehmungen (26) vorgesehen sind.

5. Transportsystem nach einem der Ansprüche 2 bis 4, wobei die Ausnehmungen (26) und die Fortsätze (28) konisch oder kegelig oder kegelstumpfförmig sind.

6. Transportsystem nach einem der vorhergehenden Ansprüche, wobei der Träger (20) zwei einander gegenüberliegende Seitenränder hat, an denen die zweiten Eingriffsmittel zumindest teilweise angeordnet oder gebildet sind, wobei die zweiten Eingriffsmittel an zwei Stegen oder Zinken (18) des vertikalen Carriers (16) abstützbar sind.

7. Transportsystem nach Anspruch 6, wobei die beiden Stege oder Zinken (18) etwa parallel zueinander und etwa waagerecht sind, und wobei die beiden Seitenränder etwa parallel zueinander und etwa waagerecht sind.

8. Transportsystem nach Anspruch 7, wobei der Träger (20) zwei weitere einander gegenüberliegende etwa parallele und etwa waagerechte Seitenränder hat, an denen weitere zweite Eingriffsmittel angeordnet oder gebildet sind, wobei auch die weiteren zweiten Eingriffsmittel an den Stegen oder Zinken (18) abstützbar sind.

9. Transportsystem nach einem der Ansprüche 6 bis 8, wobei jeder Steg oder jede Zinke (18) zwei u-förmige oder v-förmige Aufnahmeabschnitte (34) hat, und wobei die zweiten Eingriffsmittel bogenförmige oder dachförmige Aufnahmeabschnitte (32) sind, wobei an den zwei oder vier Seitenrändern jeweils zwei bogenförmige oder dachförmige Aufnahmeabschnitte (32) angeordnet sind.

10. Transportsystem nach Anspruch 9, wobei die vier oder acht bogenförmigen oder dachförmigen Aufnahmeabschnitte (32) als seitlich aus einem Hauptkörper des Trägers (20) hinausragende Haken (30) gebildet sind.

11. Transportsystem nach einem der Ansprüche 6 bis 8, wobei die zweiten Eingriffsmittel von waagerechten Nuten oder Stufen (36) gebildet sind, die jeweils unter den zwei oder den vier Seitenrändern des Trägers (20) angeordnet sind, wobei in den Nuten jeweils ein Steg oder eine Zinke (18) zumindest abschnittsweise aufnehmbar ist, oder wobei an den Stufen (36) jeweils ein Steg oder eine Zinke (18) zumindest abschnittsweise anlegbar ist.

12. Transportsystem nach einem der vorhergehenden Ansprüche, wobei ein Hauptkörper (24) des horizontalen Carriers (4) und ein Hauptkörper (24) des vertikalen Carriers (16) gleich sind.

13. Transportsystem nach den Anspruch 12, wobei der Hauptkörper (24) der horizontalen Carriers (4) und der Hauptkörper (24) des vertikalen Carriers (16) und ein Hauptkörper des Trägers (20) jeweils eine quadratische Grundfläche haben.

14. Transportsystem nach einem der vorhergehenden Ansprüche, wobei der horizontale Stator modular aus horizontalen Statorkacheln (1) gebildet ist, und wobei der vertikale Stator modular aus vertikalen Statorkacheln (12) gebildet ist, wobei die Statorkacheln (1, 12) ein magnetisches Wanderfeld erzeugen, das über Ränder der Statorkacheln (1, 12) hinweg wirken kann, wobei die Carrier (4, 16) jeweils mindestens einen Permanentmagneten aufweisen, mittels dem er bewegbar ist, **dadurch gekennzeichnet, dass** die horizontalen Statorkacheln (1) und die vertikalen Startorkacheln (12) gleich sind.

15. Transportsystem nach einem der vorhergehenden Ansprüche, wobei an dem horizontalen und dem vertikalen Stator ein jeweiliges Sensorsystem angeordnet ist, über das die Position des jeweiligen Carriers (4, 16) relativ zum jeweiligen Stator bestimmbar ist.

## Claims

1. Transport system, having a horizontal transport installation which has a horizontal stator by means of which at least one horizontal carrier (4) is movable in a horizontal plane (2), and having a vertical transport installation which has a vertical stator by means of which at least one vertical carrier (16) is movable in a vertical plane (14), wherein at least one mounting (20) for receiving a payload (22) is provided, **characterized in that** the mounting (20) has first engagement means (28) and separate second engagement means (32), wherein the mounting (20) by way of the first engagement means thereof is able to be brought to engage in a form-fitting manner with the horizontal carrier (4), and wherein the mounting (20) by way of the second engagement means thereof is able to be brought to engage in a form-fitting manner with the vertical carrier (16), wherein the two form-fitting engagements are designed such that the mounting (20) is supported on the respective carrier (4, 16) in relation to gravity, and is secured in relation to horizontal displacement.

2. Transport system according to Claim 1, wherein the first engagement means are at least two clearances (26) which are disposed on a lower side of the mounting (20) and are open toward the bottom, and wherein the horizontal carrier (4) on the upper side thereof has a corresponding number of upward-directed appendages (28), or wherein the first engagement means are at least two downward-directed appendages (28) which are disposed on a lower side of the mounting (20), and wherein the horizontal carrier (4) on the upper side thereof has a corresponding number of clearances (26) that are open toward the top.

3. Transport system according to Claim 2, wherein the at least two pairs of appendages (28) and clearances (26) are provided on mutually diagonally opposite corner regions of the mounting (20) and of the horizontal carrier (4).

4. Transport system according to Claim 3, wherein two further pairs of appendages (28) and clearances (26) are provided such that one pair of appendages (28) and clearances (26) are in each case provided in all four corner regions of the mounting (20) and of the horizontal carrier (4).

5. Transport system according to one of Claims 2 to 4, wherein the clearances (26) and the appendages (28) are conical or coniform or frustoconical.

6. Transport system according to one of the preceding claims, wherein the mounting (20) has two mutually opposite lateral peripheries on which the second engagement means are at least partially disposed or formed, wherein the second engagement means are able to be supported on two webs or prongs (18) of the vertical carrier (16).

7. Transport system according to Claim 6, wherein the two webs or prongs (18) are approximately mutually parallel and approximately level, and wherein the two lateral peripheries are approximately mutually parallel and approximately level.

8. Transport system according to Claim 7, wherein the mounting (20) has two further mutually opposite, approximately parallel and approximately level lateral peripheries on which further second engagement means are disposed or formed, wherein the further second engagement means are also able to be supported on the webs or prongs (18) .

9. Transport system according to one of Claims 6 to 8, wherein each web or each prong (18) has two U-shaped or V-shaped receptacle portions (34), and wherein the second engagement means are arcuate or roof-shaped receptacle portions (32), wherein two arcuate or roof-shaped receptacle portions (32) are disposed on each of the two or four lateral peripheries.

10. Transport system according to Claim 9, wherein the four or eight arcuate or roof-shaped receptacle portions (32) are formed as hooks (30) that protrude laterally from a main body of the mounting (20).

11. Transport system according to one of Claims 6 to 8, wherein the second engagement means are formed by level grooves or steps (36) which are in each case disposed below the two or the four lateral peripheries of the mounting (20), wherein one web or one prong (18) is at least in portions able to be received in each of the grooves, or wherein one web or one prong (18) is at least in portions able to be brought to bear on each of the steps (36).

12. Transport system according to one of the preceding claims, wherein a main body (24) of the horizontal carrier (4) and a main body (24) of the vertical carrier (16) are identical.

13. Transport system according to Claim 12, wherein the main body (24) of the horizontal carrier (4) and the main body (24) of the vertical carrier (16) and a main body of the mounting (20) each have a square base area.

14. Transport system according to one of the preceding claims, wherein the horizontal stator is formed in a modular manner from horizontal stator tiles (1), and wherein the vertical stator is formed in a modular manner from vertical stator tiles (12), wherein the stator tiles (1, 12) generate a traveling magnetic field which can be effective beyond peripheries of the stator tiles (1, 12), wherein the carriers (4, 16) each have at least one permanent magnet by means of which said carrier (4, 16) is movable, **characterized in that** the horizontal stator tiles (1) and the vertical stator tiles (12) are identical.

15. Transport system according to one of the preceding claims, wherein a respective sensor system by way of which the position of the respective carrier (4, 16) relative to the respective stator is able to be determined is disposed on the horizontal and the vertical stator.

## Revendications

1. Système de transport comprenant un dispositif de transport horizontal qui comporte un stator horizontal permettant de déplacer au moins un porteur horizontal (4) dans un plan horizontal (2) et un dispositif de transport vertical qui comporte un stator permettant de déplacer au moins un porteur vertical (16) dans un plan vertical (14), au moins un support (20) étant prévu pour recevoir une charge utile (22), **caractérisé en ce que** le support (20) comporte des premiers moyens d'engagement (28) et des deuxièmes moyens d'engagement séparés (32), le support (20) pouvant être amené en engagement par complémentarité de formes avec le porteur horizontal (4) par le biais de ses premiers moyens d'engagement, et le support (20) pouvant être amené en engagement par complémentarité de formes avec le porteur vertical (16) par le biais de ses deuxièmes moyens d'engagement, les deux engagements par complémentarité de formes étant conçus de telle sorte que le support (20) s'appuie sur le porteur respectif (4, 16) en s'opposant à la gravité et est sécurisé contre un coulissement horizontal.

2. Système de transport selon la revendication 1, les premiers moyens d'engagement étant au moins deux évidements ouverts vers le bas (26) et disposés sur un côté inférieur du support (20), et le porteur horizontal (4) comportant sur son côté supérieur un nombre correspondant de projections dirigées vers le haut (28), ou les premiers moyens d'engagement étant au moins deux projections dirigées vers le bas (28) et disposées sur un côté inférieur du support (20), et le porteur horizontal (4) comportant sur son côté supérieur un nombre correspondant d'évidements (26) ouverts vers le haut.

3. Système de transport selon la revendication 2, les au moins deux paires de projections (28) et d'évidements (26) étant prévues sur des zones de coin, diagonalement opposées, du support (20) et du porteur horizontal (4).

4. Système de transport selon la revendication 3, deux autres paires de projections (28) et d'évidements (26) étant prévues de sorte qu'une paire de projections (28) et d'évidements (26) soit prévue dans chacune des quatre zones de coin du support (20) et du porteur horizontal (4).

5. Système de transport selon l'une des revendications 2 à 4, les évidements (26) et les projections (28) étant conoïdes ou coniques ou en forme de cône tronqué.

6. Système de transport selon l'une des revendications précédentes, le support (20) comportant deux bords latéraux opposés sur lesquels les deuxièmes moyens d'engagement sont au moins partiellement disposés ou formés, les deuxièmes moyens d'engagement pouvant s'appuyer sur deux nervures ou dents (18) du porteur vertical (16).

7. Système de transport selon la revendication 6, les deux nervures ou dents (18) étant à peu près parallèles l'une à l'autre et à peu près horizontales, et les deux bords latéraux étant à peu près parallèles l'un à l'autre et à peu près horizontaux.

8. Système de transport selon la revendication 7, le support (20) comportant deux autres bords latéraux opposés à peu près parallèles et à peu près horizontaux, sur lesquels d'autres deuxièmes moyens d'engagement sont disposés ou formés, les autres deuxièmes moyens d'engagement pouvant également s'appuyer sur les nervures ou dents (18).

9. Système de transport selon l'une des revendications 6 à 8, chaque nervure ou broche (18) comportant deux portions de réception (34) en forme de U ou de V, et les deuxièmes moyens d'engagement étant des portions de réception en forme d'arche ou en forme de toit (32), deux portions de réception (32) en forme d'arche ou en forme de toit étant disposées sur chacun des deux ou quatre bords latéraux.

10. Système de transport selon la revendication 9, les quatre ou huit portions de réception (32) en forme d'arche ou en forme de toit étant formées sous forme de crochets (30) qui font saillie latéralement d'un corps principal du support (20).

11. Système de transport selon l'une des revendications 6 à 8, les deuxièmes moyens d'engagement étant formés par des rainures ou marches horizontales (36) qui sont chacune disposées sous les deux ou quatre bords latéraux du support (20), une nervure ou dent (18) pouvant être reçue au moins par portions dans les rainures, ou une nervure ou dent (18) pouvant être placée au moins par portions sur les marches (36).

12. Système de transport selon l'une des revendications précédentes, un corps principal (24) du porteur horizontal (4) et un corps principal (24) du porteur vertical (16) étant identiques.

13. Système de transport selon la revendication 12, le corps principal (24) du porteur horizontal (4) et le corps principal (24) du porteur vertical (16) et un corps principal du support (20) comportant chacun une base carrée.

14. Système de transport selon l'une des revendications précédentes, le stator horizontal étant formé de manière modulaire à partir de tuiles de stator horizontales (1), et le stator vertical étant formé de manière modulaire à partir de tuiles de stator verticales (12), les tuiles de stator (1, 12) générant un champ magnétique à onde progressive qui peut agir sur les bords des tuiles de stator (1, 12), les porteurs (4, 16) comportant chacun au moins un aimant permanent permettant de le déplacer, **caractérisé en ce que** les tuiles de stator horizontales (1) et les tuiles de stator verticales (12) sont identiques.

15. Système de transport selon l'une des revendications précédentes, un système de capteurs respectif étant disposé sur le stator horizontal et le stator vertical et permettant de déterminer la position du porteur respectif (4, 16) par rapport au stator respectif.
